# EUROPEAN PATENT APPLICATION

(11) **EP 4 787 099 A1**
(43) Date of publication of application: **05.08.2026**
(21) Application number: 25155333.5
(22) Date of filing: 31.01.2025
(51) Int. Cl.: G05B 23/02, G06N 20/00, H02P 23/14

(54) **AUTOMATIC CONFIGURATION OF ELECTRIC DRIVES AND MOTORS**

(71) Applicant: ABB SCHWEIZ AG, 5400 Baden (CH)
(72) Inventor: ASHIWAL, Virendra, 68542 Heddesheim (DE); RITTER, Marcus, 64297 Darmstadt (DE); PALACIO, Sebastian, 69221 Dossenheim (DE); SCHOCH, Nicolai, 69120 Heidelberg (DE)
(74) Representative: Maiwald GmbH

(57) **Abstract**

A method (100) for configuring at least one electric drive (1) that is connectable to at least one electric motor (2), and/or the electric motor (2), the method (100) comprising the steps of:
• providing (110) a request (3) for configuring the electric drive (1) and/or electric motor (2) to at least one agent software component (4);
• decomposing (120), by the at least one agent software component (4), the task of configuring the electric drive (1) and/or electric motor (2) into a sequence (5) of sub-actions (5a-5f); and
• causing (130), by the at least one agent software component (4), the performing of each sub-action (5a-5f), so that completing all sub-actions (5a-5f) results in the electric drive (1) and/or electric motor (2) being at least partially configured.

## Description

### FIELD OF THE INVENTION

The invention relates to the automatic determining of configuration parameters for electric drives and electric motors, in particular for electric drives and motors employed in industrial plants and/or processes. In particular, these configuration parameters may be used for the configuration and/or commissioning of electric drives and/or electric motors.

### BACKGROUND

Electric motors are used in a wide range of industrial applications, such as in conveyors, stirrers, robots or cranes. The electric motors are powered by electric drives that control the rotational speed of the motor. The electric drives may optionally cause the motor to move to an exact given position. To obtain feedback about the current position of the electric motor or a member driven by it, encoders may be used that convert this position into an electrical signal.

Configuration of the electric drives and/or electric motor parameters, and in particular of any encoders used, is presently a mainly manual task that needs to be performed by human experts. It is therefore prone to human error. Also, a scarcity of such experts may be a bottleneck for the deployment of electric drives and motors.

In particular, making the configuration optimal with respect to any given optimization goal, such as energy usage, is more of an art than it is of an industrial task.

### OBJECTIVE OF THE INVENTION

It is therefore an objective of the present invention to allow for an at least partially automated configuration of electric drives and motors, thereby increasing efficiency and reducing the potential for error.

This objective is achieved by a method according to the independent claim. Further advantageous embodiments are detailed in the dependent claims.

### DISCLOSURE OF THE INVENTION

The invention provides a method for configuring at least one electric drive that is connectable to at least one electric motor, and/or this electric motor. In particular, "configuring" may mean determining a set of configuration parameters that is to be applied to the electric drive, and/or to the electric motor.

In particular, the electric drive may be an industrial electric drive that is connected to an industrial electric motor. Such industrial electric motors may be mechanically connected to machines in an industrial plant, and/or machines participating in an industrial process, to move certain parts and/or members of the plant, and/or certain parts and/or members that physically act upon the industrial process, based on a given industrial application. Examples of such applications include conveyors (such as conveyor belts), heating processes and chilling processes that involve mixing and/or stirring, cranes, but also escalators, elevators, ski lifts or other people movers.

In the course of the method, a request for configuring the electric drive and/or electric motor is provided to at least one agent software component. This agent software component may have access to at least one generative machine learning model, GMLM, such as a large language model, LLM, or a small language model, SLM. In particular, such language models may predict, given a sequence of words or other textual items, next words or textual items in the sequence. In this manner, the language model may produce a long text, such as human-readable instructions for configuring the electric drive and/or motor, of a configuration file that may be downloaded to the electric drive and/or motor, piece by piece.

The agent software component may also have a reasoning capability. In particular, this may mean that it has a given goal, instruction, memory, history of decision, and anything else that is needed to reason over a given goal. Optionally, the agent software component may also have access to internal or external tools for performing specific tasks or actions given a particular form of input.

The agent software component decomposes the task of configuring the electric drive and/or electric motor into a sequence of sub-actions. It then causes the performing of each sub-action, so that completing all sub-actions results in the electric drive and/or electric motor to be at least partially configured.

In the course of performing at least one sub-action, based on this to-be-performed sub-action, a query for a generative machine learning model, GMLM, is obtained. Herein, "obtained" may, in particular, comprise generating this query from information that is indicative of the to-be-performed sub-action. But for particular tasks, predefined queries and/or prompts for use with the GMLM may be readily available.

The query is provided to the GMLM. Also, context information is provided to the GMLM as well. This context information is at least indicative of the nature of the electric drive and the of the role of this electric drive and the electric motor to be connected to it. In particular, different instances of one and the same type of electric drive and electric motor may be used in many different industrial plants or processes, and assume very different roles depending on this end user application or use case. For example, one instance of a particular type of motor connected to one instance of a particular type of electric drive may move an escalator in a people-mover application. But a different instance of the same type of motor connected to a different instance of the same type of electric drive may stir a mixture of educts in a chemical production process. For example, the context information may be provided to the GMLM together with the query. But this is not required. For example, the agent software component may fetch the required context information using tools based on the given query and/or goal, and provide this context information to the GMLM later.

Based at least in part on the output of the GMLM, a result with respect to the to-be-performed sub-action is computed. In particular, this computation may enlist the help of any further internal or external tools to which the agent software component has access. That is, to obtain the result, apart from having access to the GMLM, the agent software component may avail itself of any number of tools for specific jobs. In other words, such tools may be added as a "snap-in" to the agent software component without changing the inner workings of this agent software component itself.

That is, one or more task can also be perform by Agent using available tools. Tools may or may not be part of a Generative AI Agent. Tool can provide additional capability to Agent which can be like doing some calculation to find out some configuration parameters for the Industrial drive or can be also enable agent to connect and fetch some data from external data base/ data source or can do evaluation or guardrails to the given content generated by agent or language model, do online search, or connecting with real industrial drive to read or write drive configuration parameters.

The inventors have found that the decomposing of the task into sub-actions, in combination with the considering of the context information, greatly increases the propensity that the output obtained from the GMLM will contain useful information for the configuration of the electric drive and/or electric motor in exactly the application that is at hand. Typically, it is not practical to train a GMLM from scratch solely for the purpose of one particular industrial application. It may not even be practical to fine-tune a pre-trained GMLM for this purpose. Rather, at least to a large extent, a stock GMLM will have to be relied upon. This stock GMLM has been trained on a wide variety of use cases, i.e., the knowledge of a GMLM about a generically usable electric motor and/or electric drive may span a wide domain of different applications. This is a blessing and a curse: On the one hand, knowledge for many different use cases is available. On the other hand, the knowledge for one use case is not necessarily usable in another use case. Out of the wide variety of knowledge that is available, the correct knowledge needs to be selected. The decomposing and the considering of the context information greatly helps with this selection. However, the present method works just as well in a situation where the GMLM has been wholly or partially trained on drive or motor configuration data.

The end result is that a larger part of the sought configuration of the electric drive and/or electric motor may be determined automatically, relieving system integrators or other experts from a lot of routine work. It is also possible to steer the configuration towards any desired optimization goal by adding this optimization goal to the query. For example, a phrase like "in a manner that the least amount of energy is used" or "in a manner that wear of the electric motor is minimized" may be appended to the query. For these advantages to set in, it is not required that the complete configuration must be successfully determined in an automated manner. Rather, there is already a relief from manual work if at least some of the configuration is determined automatically, and any remaining gaps are left for a human expert to fill.

The method is not a mere lift-and-shift automation of what the human expert previously did. It strives for an end result that is of the same type, namely a configuration of the electric drive and/or electric motor. But as discussed above, the manner in which this end result is obtained is specifically adapted to the properties of a stock GMLM.

Alternatively or in combination to this, the help of the GMLM may also be enlisted for the decomposing of the configuring task into sub-actions.

To this end, based on the request, a query for a generative machine learning model, GMLM, may be obtained. In particular, this obtaining may comprise generating the query from information that is indicative of the configuration task.

The query is provided to the GMLM together with context information that is at least indicative of the nature of the electric drive and the role of this electric drive and the electric motor connected to it. As discussed before, this serves to select knowledge of the GMLM that is relevant for the particular use case at hand.

A set of sub-actions is computed based at least in part on the output obtained from the GMLM. That is, the GMLM may deliver an output from which the needed sub-actions may then be derived. Computations may be performed on the output obtained from the GMLM, so that sub-actions emerge. Alternatively or in combination to this, information on some but not all sub-actions may be delivered by the GMLM, and any gaps may be filled by further computations.

In a particularly advantageous embodiment, in the course of performing at least one sub-action, based on this to-be-performed sub-action, a retrieval query for a database or other information retrieval system is obtained. As discussed before, the obtaining may comprise generating the retrieval query, or a retrieval query may be readily available for a particular sub-task. The retrieval query is then supplied to the database or other information retrieval system. In this manner, a response is obtained from the database or other information retrieval system. Based at least in part on this response, a result with respect to the to-be-performed sub-action is computed. In this manner, if the database or other information retrieval system contains information that is more pertinent and/or more specific to the situation than information obtainable from the GMLM, it may be put to use. Thus, for every sub-task, the information that is most specific and/or pertinent may be used.

Actions like this may be performed by tools. For example, the agent software component may have a tool which can connect to a database and provide information for a certain drive hardware and/or motor hardware.

For example, in one of the sub task, the agent software component may have a task to get additional information (max allowed torque value) about the widely used industrial drive ACS880. Information about ACS880 may be stored in external database, and the agent software component may have a tool (e.g. python function or via an API call) which can connect to this external database and fetch required information.

Now the agent software component may call this tool with these two inputs argument to the tool (drive name as ACS880, and required info as "what is allowed torque value"). Once the tool is called, then the tool may provide an answer to this query back to the agent, and then the agent can use this answer to fulfill his task or can validate if the information is correct and in allowed range or not. If the agent does not agree with the result, i.e., does not deem it to be usable for any reason, then it can reuse the same tool for retrieval of the same information with additional extended (e.g., more precise) query in the hope of receiving a usable answer on the next attempt. Alternatively or in combination to this, if a better tool is available, then this better tool may be used to do the same job.

Having this functionality in tools that are separate form the agent software component itself brings about the advantage that the tools may be better maintained independently of the agent software component itself. In particular, interfaces to external databases may be subject to change because of changes made to these external databases by their supplier.

In a further particularly advantageous embodiment, the retrieval query comprises at least an identifier of the electric drive, and/or of the electric motor. In this manner, the retrieval query can be made to yield at least configuration options and parameters that are, in principle, available for this electric drive and/or electric motor. Optionally, the retrieval query may comprise any further suitable information about the actual use case and application of the electric motor. Out of the set of properties that an electric motor has to offer, different properties may be relevant for different applications. For example, in a first application, there may be a need to stop the motor at a precise defined position, whereas, in a second application, brute torque is what matters. Consequently, in the different applications, the motor may have to be actuated in different manners.

In a further particularly advantageous embodiment, the database or other information retrieval system is chosen to comprise configuration parameters
- for electric drives and/or electric motors in an industrial plant that are already configured, and/or
- for electric drives and/or electric motors from the same manufacturer as the to-be-configured electric drive and/or electric motor.

This facilitates a setup process of a plurality of electric drives and/or electric motors that need to be configured somewhat similarly. That is, if the setup process is repetitive to some degree, but not repetitive enough for basically replicating the configuration information in a copy-paste manner, at least some of the sought configuration information may be determined automatically, depending on the concrete application.

To facilitate access of these database other than providing direct access to database/other retrieval system, one can also use respective tools (e.g. python function or via API call) which are responsible to connect to data base and provide requested details.

In a further particularly advantageous embodiment, after performing one sub-action, it is determined whether this sub-action was performed successfully. This determining may be performed in any suitable manner. For example, the agent software component itself may check this on its own, and/or using one or multiple tools for validation/evaluation. Alternatively or in combination to this, a human operator or expert may be prompted to confirm whether the sub-action was performed successfully.

In response to determining that the sub-action was performed successfully, the performing of the sub-actions may proceed to the next sub-action in the sequence. By contrast, in response to determining that the sub-action was not performed successfully, this sub-action may be redone. In particular, when the sub-action is redone, the manner of performing it may be modified. For example, a different source of information may be used, or a query to this source of information may be modified. In one example, when re-doing the sub-action, the query may be augmented with information that is indicative of why the first attempt failed. For example, error messages or other feedback obtained in the first attempt may be included in the new query.

In particular, an agent software component that has access to one or more tools may call, after the performing of each task/subtask, one or more tools and ask if the outcome of the task/subtasks is in the accepted level or not. If it is not, then the agent software component may get this feedback and redo the task either with same previous tools with more additional information or can also choose another tool to do the given task/subtask.

In a further particularly advantageous embodiment, the re-doing of the sub-action comprises choosing, by the at least one agent software component, at least one resource that was not used in the previous attempt of performing the sub-action. Herein, the term "resource" basically comprises everything that is in principle available, but was not used yet. For example, a resource may be a source of information, a tool, or even a prompt to a human operator or expert. When performing the sub-action again, the help of this newly chosen resource is enlisted. That is, the re-doing is performed with a different set of resources than that which was used to perform the previous attempt.

Alternatively or in combination to this, the re-doing of the sub-action may comprise changing an order in which at least two resources were used to perform the sub-action on the previous attempt. This order may matter because an earlier used resource may deliver information that may be used by a later used resource. For example, if the GMLM was called upon first and a database was consulted later on the first attempt, the database may be consulted first and the GMLM may be called upon later on the second attempt.

The reasoning behind the options for re-doing of sub-actions mentioned above is that a failure of a sub-action to complete is unlikely to disappear if a next attempt is made without changing anything. There are few, if any, reason why the second attempt should work except the reason that at least something has been actively changed for the better.

As discussed above, in a further particularly advantageous embodiment, the determining whether a sub-action was performed successfully is based at least in part on feedback obtained from the electric drive and/or electric motor, and/or from a controller to which the electric drive and/or electric motor is attached. For example, error codes or messages may be evaluated. Alternatively or in combination to this, feedback may also be obtained from an operator, system integrator or other human expert.

In a further particularly advantageous embodiment, the context information comprises one or more of:
- a manual or a parameter sheet of the electric drive and/or electric motor;
- commissioning setup information for the electric drive and/or electric motor;
- a manual or a parameter sheet of an apparatus comprising the electric drive and/or electric motor;
- a documentation of past configuration actions of electric drives and/or electric motors; and
- a user application and/or use case in which the electric drive and/or electric motor is used.

In this manner, the GMLM may apply its reasoning power that it has obtained during training while making use of very specific context information that is usually not publicly available. Because configuration parameters are very specific to particular types of electric drives and electric motors, one and the same parameter that is of the same (physical) measurement unit or other dimension may have very different meanings and effects on different electric drives and electric motors. Thus, the information about what is behind a concrete type of electric drive or electric motor allows the GMLM to reason what will happen if a particular configuration parameter is changed.

In particular, a user may buy a machine on the one hand, and electric motors with associated electric drives to mechanically power the machine on the other hand, from different suppliers. A system integrator or commissioning engineer who is specialized on the machine itself is then faced with a lot of different electric motors and electric drives on the user side that may come as a complete "surprise" to him. This makes the manual configuration even more difficult, so the relief that is brought about by the automatic configuration is even more pronounced.

Also, even one and the same machine may be put to very different uses on the user side, so one and the same action performed by the machine may have different meanings and consequences in an industrial plant or process as a whole.

In a further particularly advantageous embodiment, the electric drive, and/or the electric motor, comprises at least one encoder that provides precision position measurements through electrical feedback signals, configured to measure a position that is influenced by the electric motor, and configuring the electric drive, and/or the electric motor, comprises configuring the encoder. Encoders are even more prone to being bought separately from machines, electric drives and electric motors. Also, there is some freedom as to whether to put encoders onto the motor side or onto the load side (i.e., onto the load moved by the motor). The user may choose particular types of encoders for any possible reason. Thus, the system integrator is quite likely to be faced with an encoder previously unknown to him, but he has to make the system as a whole work nonetheless.

In a further particularly advantageous embodiment, at least one sub-action comprises determining a set of configuration parameters to be applied to the electric drive and/or electric motor, e.g., to an encoder. When these configuration parameters are applied to the electric drive and/or electric motor, optionally after augmentation by a system integrator or other expert, the electric drive and/or electric motor will perform their assigned function in the application intended by the user.

In a further particularly advantageous embodiment, at least one sub-action comprises optimizing at least one configuration parameter towards a given goal. In this manner, rather than obtaining any configuration for the electric drive and/or electric motor that works as intended, a configuration that is best in a given respect is obtained. For example, the optimization goal may comprise minimizing energy usage, minimizing wear and tear of the electric motor, or maximizing the accuracy of the measurements performed by an encoder.

In a further particularly advantageous embodiment, at least one sub-action comprises checking the feasibility and/or validity of the configuration parameters based on a given ruleset. In this manner, existing a priori knowledge about what is feasible and valid may be put to use. What is already known does not need to be extracted from the GMLM. In particular, the checking may be used to catch problems in the determined configuration that are "showstoppers" for the working of the electric drive and/or electric motor. For example, if the syntax of the configuration is not correct, or an essential part is missing, the drive and/or motor will not work at all with this configuration.

In a further particularly advantageous embodiment, the sequence of sub-tasks includes the steps of:
- determining a template that designates needed configuration parameters;
- determining values of at least some of the needed configuration parameters; and
- merging these determined values with the determined template.

In this manner, a set of parameters that are in principle available may be obtained, and the sub-set of the parameters that may be obtained using the present method may then be filled into this template. It is then clear what is still missing and needs to be completed by a system integrator or other expert. The partial filling in of the template already provides a huge relief from manual configuration work.

In a further particularly advantageous embodiment, at least one sub-action comprises:
- providing information that is indicative of the type of electrical drive and/or electric motor, of its location in an industrial plant, and/or of its intended use, to a trained machine learning model; and
- obtaining configuration parameters as output from the trained machine learning model.

In this manner, the power of the trained machine learning model to generalize may be exploited. As discussed before, the configuration of a large number of electric drives and/or electric motors is repetitive to some degree, but not repetitive enough for a copy-paste of the configuration from one drive/motor to the next. The trained machine learning model may capture the differences between the different instances of electric drives and/or motors in an industrial plant or other application.

In a further particularly advantageous embodiment, at least two sub-tasks may be performed concurrently by two different software agent components. In this multi-agent setting, the total amount of work may be split onto multiple computers and/or compute instances, so the configuration may be obtained quicker. Also, each agent software component may specialize on its particular task. Multiple agent software components may utilize various agentic patterns to coordinate among themselves.

In one example, the two different software agent components are configured to provide different sets of context information to the GMLM. In this manner, they may share one single GMLM, but put this one single GMLM to very different uses. This saves resources that would otherwise be needed for further GMLM instances, in particular memory.

As discussed before, it is well possible that the automatic determining of the configuration will not cover all available aspects of the configuration. But this is not required for the advantages promised by the present method to appear. Rather, every part of the configuration that is determined automatically helps to relieve system integrators or other humans from manual configuration work. It is therefore perfectly acceptable if some of the configuration work remains to be done manually, rather than having to expend a disproportionate amount of effort for also automating the determining of these last aspects. Therefore, in a further particularly advantageous embodiment, an operator of an industrial plant is prompted for configuration information that is still missing after having completed all sub-actions.

In a further particularly advantageous embodiment, a configuration of the electric drive and/or motor determined by the present method (optionally with further input from a human expert), e.g., in the form of configuration parameters, is loaded onto the electric drive and/or motor. In this manner, the configuration is put into practice and enables the electric drive and/or electric motor to work as intended. The device to which the configuration is loaded may be a real device, but also a virtual device, such as a "digital twin" of a real device. Optionally, after the loading, validation checks may be performed using any communication protocol. That is, the real or virtual device may be queried whether it can work properly using the loaded configuration.

The loading (uploading or downloading, depending on the perspective) of configuration information to the real or virtual electric drive and/or electric motor may be performed in various manners.

In one example, the agent software component that has a tool (software function like python function) may connect to a drive (real or virtual one) and download final config parameters to the drive using any industrial communication protocol.

The loading can be also done manually by a human who does this downloading config para to industrial drive (real or virtual) using any available ways (For example using any external tools which is not in the scope of multi agent system).

In another example, the loading can be also done manually by a human who does this downloading config parameters to industrial drive (real or virtual) using any available ways (for example, using any external tools which is not in the scope of multi agent system).

Then, once parameters are downloaded to the real/virtual industrial drive, the agent software component can cause, by a tool or any other suitable means, evaluation/validation to check if industrial drive/motor is performing as it should be. If drive is not performing as it should be, then the multi-agent system will take the feedback from drive (by reading some drive parameters, errors, or logs) and use this as additional input to run the whole process again, until the drive/motor performs as it should be.

Ideally, the evaluation/validation is performed by an automated tool. Alternatively or in combination to this, a human operator or other expert may also provide feedback back to the agent software component and/or to the present method as to what worked and what did not work. The agent software component may then use this feedback and perform further evaluation/validation, so that it may redo the sub-task to find new parameters. Furthermore, the human can also determine, after downloading the configuration parameters to the real/virtual industrial drive, that everything worked fine. Then, the agent software component, and thus the present method, have done their job successfully.

In a further particularly advantageous embodiment, an industrial process is executed on an industrial plant, wherein the at least partially configured electric drive and/or electric motor participates in the industrial process. In this manner, this industrial process as a whole benefits from the configuration that has been determined and applied to the electric drive and/or electric motor.

Because it may be fully or at least partially computer-implemented, the present method may be embodied in the form of a software. The invention therefore also relates to a computer program with machine-readable instructions that, when executed by one or more computers and/or compute instances, cause the one or more computers and/or compute instances to perform the method described above. Examples for compute instances include virtual machines, containers or serverless execution environments in a cloud. The invention also relates to a machine-readable data carrier and/or a download product with the computer program. A download product is a digital product with the computer program that may, e.g., be sold in an online shop for immediate fulfilment and download to one or more computers. The invention also relates to one or more compute instances with the computer program, and/or with the machine-readable data carrier and/or download product.

In the following, additional explanations are given why the present method is particularly advantageous for the use case of encoders in an electric drive and/or motor.

Encoders are used in a wide range of industrial applications to provide precision position measurement through electrical feedback signals. Configuration of these encoders is crucial for precise control, increase efficiency, and for safety. For a given motion application, they can be used to provide accurate control of motor speed and position, to increase overall efficiency. Feedback of the encoders can be also used to identifying irregularities in drive system operation, preventing accidents or damage.

Configuration of these encoders is done manually by human experts and hence prone to human error. With increased number of drives in a setup, the time to identifying encoder configuration also increases drastically. On top of that, if there are any errors in the process then to resolve them also need significant amount of expertise and time. For newcomers and for customers, this would be hard to do, and they are mainly depending on system integrators or some experts.

Therefore, the present method provides a Generative AI Agent-based solution to identify encoder configuration parameters for a given industrial application setup. The Proposed setup requires only minimum inputs, and it can identify right configuration of given industrial application. This will eliminate human error and speed up overall configuration therefore it also enables non-experts to do such configuration (to a large extend / to a good-enough level).

Currently, encoder config is done manually. Based on the application setup (multiple of encoders from various vendors, then their position in setup either at motor side or load side, then numbers of motors and drive), it can be a significant amount of manual work considering applications where number of drives are up to couple of hundreds in numbers. On top of that, if there are any errors in the configuration or in commissioning setup then diagnosing them for huge numbers of drives could be very difficult and time consuming.

On top of that, the configuring person needs to possess certain technical skills, so again here relying mainly on our engineers or system integrators. End customers, who might not be technically skilled to do encoder configuration or to resolve errors due to that, may then have to wait until they get such support either from vendors or from system integrators, which also delay in their installation process. For certain type of setup, it might be even needing some experts with certain level of technical skills which also is not the case all the time.

The present method uses the concept of Generative AI Agent (GenAlAgent) in order to do the encoder configuration for a given industrial application. A GenAlAgent has the ability to think and decompose a given task to smaller actionable (sub)tasks. A Generative AI Agent has access to tools which it can interact with whenever it is needed to work on a given task, has memory to remember past results.

Inspired from the generic Gen AI Agent concept, the present method integrates and elaborates on this concept in order for the particular encoder configuration process. The present method provides a GenAlAgent, and a GenAlAgent based multi-agent system, for encoder configuration along with the specific, non-trivial required building blocks and mechanisms so it can cope with the task of encoder configuration.

Industrial drive + Motor providers have required tools and necessary knowledge to do an encoder configuration for all its drive's products, so this is the state of the art today. "Tools" are, e.g., drive manuals, encoder parameter sheets, commissioning setup information, expert knowledge, previous learning and history, a AI/ML model who provide prediction of such encoder parameters etc. With the present method, for the first time, we use this existing knowledge and streamline the process using generative Al-Agent due to its planning, reasoning and ability to work with external multiple tools.

Currently, to do encoder configuration via manual process, we need:
∘ Information regarding industrial drives, motors, and application setup information.
∘ Number of encoders with their exact name.
∘ Based on the above information, manually identify encoder parameters for the given industrial application.
∘ Download these parameters to drive and check if there are any warning or fault error code.
∘ Check manual or talk to experts to resolve these warning or fault error code.
∘ Once all warning or fault errors are resolve then run validation check to make sure that setup with right encoder parameters is configured correctly.

With the present method, we want to streamline the encoder configuration. User will have a frontend to interact with the whole setup.

The frontend has a chat-based interface, where you can enter encoder numbers and their types, industrial drive numbers and its types, motor numbers and its types, and their setup information like how they are connected to each other in the customer application. These are the information needed for our proposed setup.

The backend is where GenAlAgent gets input via frontend. Here it first decomposes user input, think, and prepare plan accordingly. Plan is made up of various executable steps which need to be done in the provided order. Each step in the plan may or may not require interaction with various artifacts required to do encoder configuration. These artifacts are available as tools to the GenAlAgent. These tools are with well-defined description such as what they do, what inputs they accept and what output (including format), they will generate. GenAlAgent uses these tool descriptions in its plan so that right tools are selected at right step.

Here we will have various required tools which would facilitate this whole configuration. Tools are:
1. Drive Manual as database: to understand various drive parameters and their meaning in drive operation context.
2. Online Search: To search and find required encoder parameters from their datasheets
3. Config para database: here all possible combination of drive, encoder, motor, and load will be listed. Based on user input of their setup, relevant setup will be fetched and provided to DriveAlAgent.
4. A method or function to download drive parameters to drive: Once the required encoder config parameters are found and filled, then this tool will provide a functionality to download those parameters to the drive. For downloading, it can use any type of communication protocol (OPC UA, MQTT, Field bus communication (ProfiBus, Modbus, or any proprietary field bus...).
5. Validation checking tool: Once the parameters are downloaded to drive, then this tool would validate drive behavior. If the behavior is not the same as expected, then it will provide the difference in behavior to DriveAlAgent for further refinements to the user. User then can take informed decisions to update drive parameters in order to pass the validation check.

Memory: Along with tools, it also has memory access where all its results, reasoning are saved for future reference and should be used in planning or reasoning phase. There could be various way this memory can be implemented such as short, long term, ..). This is just a generic component.

Reflection and Planning module: GenAlAgent also has reflection and planning module which are useful to first plan a given user tasks and for each task when GenAlAgent trigger some tools then uses this reflection module to check if the received output from a tool is as expected or not. Here one way to check that is to go through all the logs created by agent or tools. Human can also intervene here (If input from human is configured) and go through those logs for reasoning purpose. There are many design patterns available to create such modules (Various prompt engineering from basic to advanced).

An exemplary process may comprise the following steps:
i. Based on user input via frontend with all required information, GenAlAgent will extract list of encoders.
ii. It will use these encoder names and find relevant datasheet from its own provided storage location. If the required encoder datasheets are not found, then GenAlAgent will use its online search tool to find the datasheets and then save it locally or at defined location for further use.
iii. Once the datasheets are available then it will first find out the type of the encoder from the datasheet.
iv. Based on encoder type, then GenAlAgent will extract relevant information from the datasheet. There is list of known parameters to GenAlAgent for a given type of encoder. With that required encoder parameters will be extracted for all relevant encoders based on its type.
v. When the final encoder parameters are prepared, then GenAlAgent will download then to respective drive using a communication protocol. It can be OPC UA, MQTT, or any field bus based.
vi. After downloading encoder parameters to drive, GenAlAgent will monitor error/warning logs of the drive. If there are any errors/warning codes appearing, then GenAlAgent will use its knowledge database (drive manual based database, customer tickets, or internal expert knowledge) to identify suitable solution and provide it to user at frontend. Here also human can be involved to judge the final output. If not suitable then the whole process or part of the process can be re-run.
vii. User then can take informed decision based on the error assistance provided by GenAlAgent.
viii. Once the error/warning has been resolved then the last step will be carried out, which is validation check to know if the drive working exactly how it was desired for the given industrial application. Metrics for validation checks are provided to GenAlAgent and it is stored with its memory. It will utilized it to do validation checks.
ix. Interaction between frontend and backend from drive validation will carry on until the right parameters are downloaded and right behavior is achieved.

The solution may be extended to a multi-agent based setup as well where we have multiple of GenAlAgents experts in a particular tasks. They could utilize various agentic-patterns to coordinate among themselves.

The concept and system and architecture (as described above) have functionalities to allow for
- identification of encoder parameters based on provided user inputs using Generative AI Agent-based solution. It can handle multiple of encoders for a given industrial application setup;
- a System and Architecture that have multiple of agents (multi-Agent system) where agents can have different roles and responsibilities based on available expert tool access to each one of them but one can also assign dedicated tool/- s to each agent;
- Agent/multi-agents that can choose from various tools based on provided tool descriptions (includes how to use, what is expected input and output);
- Multi-Agents that communicate with each other in Agentic patterns (choreography, orchestration, or hierarchical based); and
- The system, method and process (flexibly!) following the above-described sequential workflow to accomplish the overall task and achieve the goal of encoder configuration.

The method proposed here provides, inter alia, the following benefits:
- DriveAlAgent has potential to serve as commissioning Co-pilot for engineers at the time of first installation at customer site. This saves time.
- It helps to identify best suitable optimal drive parameters. This reduces operation cost.
- Identified optimal parameters would help to be more energy efficient, therefore reducing operation and life cycle cost. This is beneficial in terms of sustainability.
- Quick(er) customer support may be provided to resolve future operational errors related to drives.
- A knowledge base of drive parameters and their relations may be created. This helps to develop and train future machine learning models.
- The human expert knowledge about drive systems may be captured and preserved, thereby retaining human expert know-how.

### DESCRIPTION OF THE FIGURES

In the following, the invention is illustrated using Figures without any intention to limit the scope of the invention. The Figures show:
Figure 1: Exemplary embodiment of the method 100 for configuring at least one electric drive and/or electric motor;
Figure 2: Exemplary collection of tools to which an agent software component may have access;
Figure 3: Exemplary multi-agent scenario.

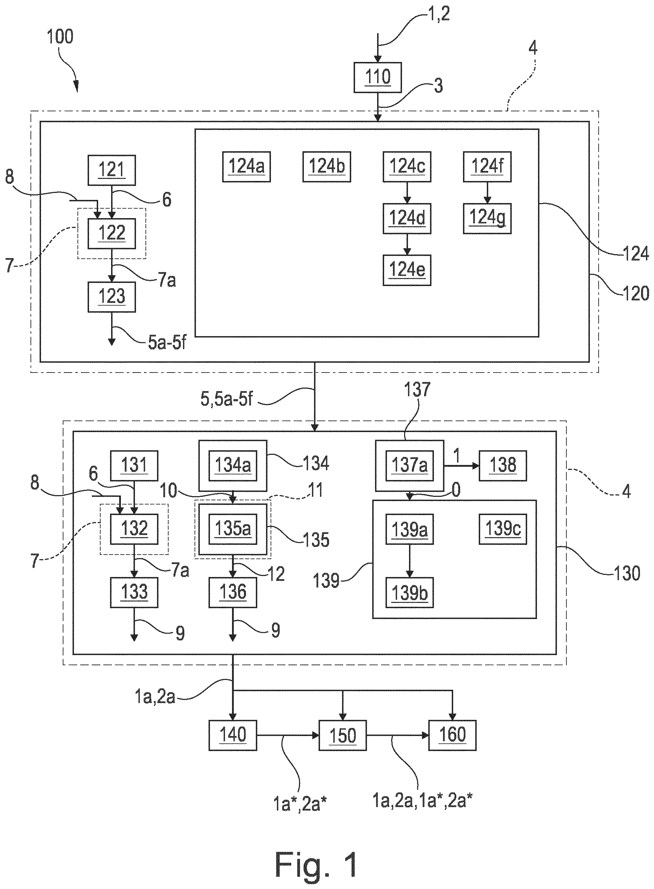

Figure 1 is a schematic flow chart of an embodiment of the method 100 for configuring at least one electric drive 1 that is connectable to at least one electric motor 2, and/or the electric motor 2.

In step 110, a request 3 for configuring the electric drive 1 and/or electric motor 2 is provided to at least one agent software component 4.

In step 120, the at least one agent software component 4 decomposes the task of configuring the electric drive 1 and/or electric motor 2 into a sequence 5 of sub-actions 5a-5f.

In step 130, the at least one agent software component 4 causes the performing of each sub-action 5a-5f, so that completing all sub-actions 5a-5f results in the electric drive 1 and/or electric motor 2 being at least partially configured. The result is an at least partial configuration 1a, 2a of the electric drive 1, and/or of the electric motor 2.

In step 140, an operator of an industrial plant may be prompted for configuration information that is still missing after having completed all sub-actions 5a-5f. The result is an augmented configuration 1a*, 2a*.

In step 150, a determined configuration 1a, 2a, 1a*, 2a* of the electric drive 1 and/or motor 2, whether augmented by a human or not, may be loaded onto the electric drive 1 and/or motor 2.

In step 160, an industrial process may be executed on an industrial plant. The at least partially configured electric drive 1 and/or electric motor 2 participates in the industrial process.

According to block 121, in the course of this decomposing 120, based on the request 3, a query 6 for a generative machine learning model, GMLM 7, may be obtained. This query 6 may then, according to block 122, be provided to the GMLM 7, together with context information 8 that is at least indicative of the nature of the electric drive 1 and the role of this electric drive 1 and the electric motor 2 to be connected to it. A set of sub-actions 5a-5f may then, according to block 123, be computed based at least in part on the output 7a obtained from the GMLM 7.

According to block 124, at least one sub-action 5a-5f may comprise determining a set of configuration parameters to be applied to the electric drive 1 and/or electric motor 2.

According to block 124a, at least one sub-action 5a-5f may comprise optimizing at least one configuration parameter towards a given goal.

According to block 124b, the feasibility and/or validity of the configuration parameters may be checked based on a given ruleset.

According to block 124c, a template that designates needed configuration parameters may be determined. According to block 124d, values of at least some of the needed configuration parameters may then be determined. According to block 124e, these determined values may then be merged with the determined template.

According to block 124f, information that is indicative of the type of electric drive and/or electric motor, of its location in an industrial plant, and/or of its intended use, may be provided to a trained machine learning model. According to block 124g, configuration parameters may then be obtained as output from the trained machine learning model.

According to block 131, in the course of causing the performing of at least one sub-action 5a-5f in step 130, based on the to-be-performed sub-action 5a-5f, a query 6 for a generative machine learning model, GMLM 7, may be obtained. According to block 132, the query 6 may then be provided to the GMLM 7 together with context information 8 that is at least indicative of the nature of the electric drive 1 and of the role of this electric drive 1 and the electric motor 2 to be connected to it. According to block 133, a result 9 with respect to the to-be-performed sub-action 5a-5f may then be computed based at least in part on the output 7a obtained from the GMLM 7.

According to block 134, based on the to-be-performed sub-action 5a-5f, a retrieval query 10 for a database or other information retrieval system 11 may be obtained. In particular, according to block 134a, this retrieval query may comprise at least an identifier of the electric drive 1, and/or of the electric motor 2.

According to block 135, the retrieval query 10 may be supplied to the database or other information retrieval system 11. In this manner, a response 12 is obtained.

In particular, according to block 135a, the database or other information retrieval system 11 may be chosen to comprise configuration parameters for electric drives 1 and/or electric motors 2 in an industrial plant that are already configured, and/or for electric drives 1 and/or electric motors 2 from the same manufacturer as the to-be-configured electric drive 1 and/or electric motor 2.

According to block 136, a result 9 with respect to the to-be-performed sub-action 5a-5f) may be computed based at least in part on the response 12 obtained from the database or other information retrieval system 11.

According to block 137, it may be determined, after performing one sub-action 5a-5f, whether this sub-action 5a-5f was performed successfully. In particular, according to block 137a, this determining may be based at least in part on feedback obtained from the electric drive 1 and/or electric motor 2, and/or from a controller to which the electric drive 1 and/or electric motor 2 is attached.

If the sub-action was performed successfully (truth value 1 at block 137), according to block 138, execution of the sequence 5 may proceed to the next sub-action 5a-5f in the sequence 5. By contrast, if the sub-action was not performed successfully (truth value 0 at block 137), according to block 139, this sub-action may be re-done.

According to block 139a, in the course of the re-doing, the at least one agent software component 4 may choose at least one resource that was not used in the previous attempt of performing the sub-action 5a-5f. It may then, according to block 139b, enlist the help of this newly chosen resource when performing the sub-action 5a-5f again.

According to block 139c, the re-doing 139 of the sub-action 5a-5f may comprise changing an order in which at least two resources were used to perform the sub-action 5a-5f on the previous attempt.

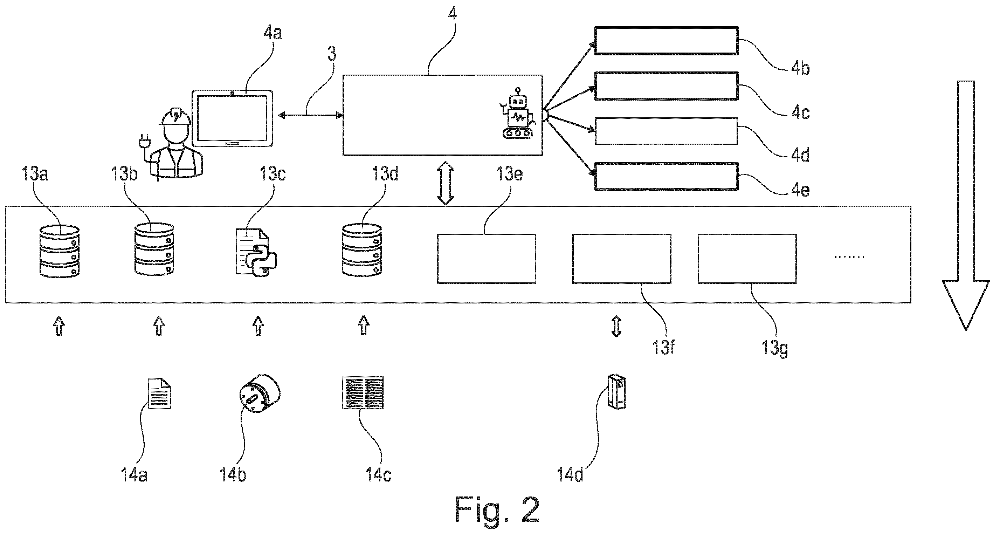

Figure 2 illustrates the interaction of an agent software component 4 with a plurality of different tools 13a-13g. The agent software component 4 gets the request for configuring the electric drive 1 and/or electric motor 2 from a user via a front-end 4a. It has a memory 4b, a planning component 4c, a library of prompt (query) templates 4d, and a reflection module 4e.

The agent software component may communicate with:
- a database connector 13a for connection to one or more databases, such as a Salesforce database;
- a vector database 13b with stored vector representations of drive manuals 14a;
- an online search module 13c (e.g., a Python component) for finding existing sets of drive parameters (e.g., encoder parameters) 14b;
- an encoder parameter database 13d with combinations 14c of encoder parameters;
- a first OPC UA client 13e for writing to an OPC UA server of the electric drive 1;
- a second OPC UA client 13f for reading error logs from an OPC UA server 14d; and
- a third OPC UA client 13g for performing validation of the configuration with the electric drive 1.

Note that OPC UA is just one exemplary communication protocol that may be used. Any other communication protocol will work just as well.

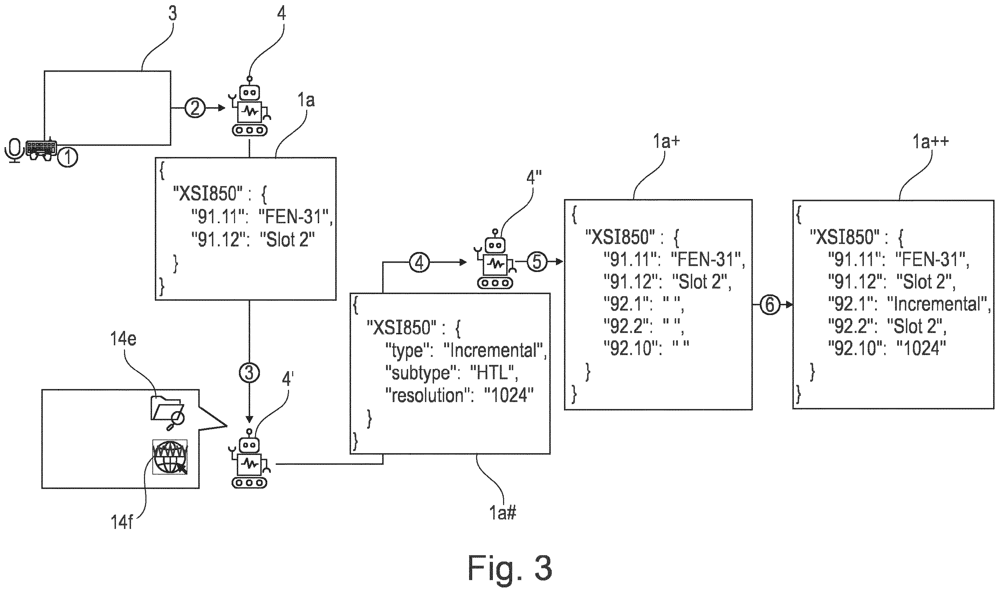

Figure 3 illustrates a multi-agent scenario for the configuration of one exemplary encoder in an electric drive 1, namely the widely used incremental encoder XS850. The request 3 for configuring the encoder is first passed to a first agent software component 4. This first agent software component 4 procures a configuration template for the encoder that, at first, only contains the information to which encoder communication card, and to which slot of this card, the encoder is connected.

A second agent software component 4' then takes over and looks up a datasheet for this concrete encoder in the data sources available to it, namely a folder 14e containing such datasheets, as well as the Internet 14f. The datasheet 1# details that the encoder is of the type "incremental encoder", that it is of a certain subtype (here: HTL), and that it has a certain resolution (here: 1024). The found datasheet 1# and the template 1a are passed on to the third agent software component 4".

This third agent software component 4" extends the original template 1a to a new template 1a* to integrate new fields for the type, subtype and resolution of the encoder. In the final configuration 1a**, these new fields are then populated with the information obtained from the template 1#.

### List of reference signs:

- 1: electric drive
- 1a: configuration of electric drive 1, template
- 1a*: human-augmented configuration 1a
- 1a+: extended template 1a
- 1 a++: populated extended template 1a*
- 2: electric motor
- 2a: configuration of electric motor 2
- 2a*: human-augmented configuration 2a
- 3: request for configuration of electric drive 1, electric motor 2
- 4, 4', 4": agent software component
- 5: sequence of sub-actions 5a-5f
- 5a-5f: sub-actions of configuring
- 6: query for GMLM 7
- 7: generative machine learning model, GMLM
- 7a: output of GMLM 7
- 8: context information
- 9: output of performing sub-action 5a-5f
- 10: retrieval query for database/retrieval system 11
- 11: database/retrieval system
- 12: output from database/retrieval system 11
- 13a-13g: tools, accessible to agent software component 4, 4', 4"
- 14a-14f: data sources, used by agent software component 4, 4', 4"
- 100: method for configuring electric drive 1, electric motor 2
- 110: providing request 3 to agent software component 4
- 120: decomposing configuring task into sequence 5 of sub-tasks 5a-5f
- 121: obtaining query 6 for GMLM 7
- 122: providing query 6 to GMLM 7 with context information 8
- 123: computing sub-actions 5a-5f
- 124: determining set of configuration parameters
- 124a: optimizing configuration parameters
- 124b: verifying validity/feasibility of configuration parameters
- 124c: determining template designating needed configuration parameters
- 124d: determining values of needed configuration parameters
- 124e: merging determined values with template
- 124f: providing information to machine learning model
- 124g: obtaining configuration parameters from machine learning model
- 130: causing performing of sub-actions 5a-5f
- 131: obtaining query 6 for GMLM 7
- 132: providing query 6 to GMLM 7
- 133: computing result 9 with respect to sub-action 5a-5f
- 134: obtaining retrieval query 10
- 134a: including identifier in retrieval query 10
- 135: supplying retrieval query 10 to database/retrieval system 11
- 135a: choosing database to comprise configuration parameters
- 136: computing result 9 based on response 12 from database/system 11
- 137: checking whether sub-action 5a-5f performed successfully
- 137a: checking based on feedback
- 138: continuing with next sub-action 5a-5f
- 139: re-doing sub-action 5a-5f
- 139a: choosing new, previously unused resource
- 139b: enlisting help of new, previously unused resource
- 139c: changing order in which resources were used
- 140: prompting operator of industrial plant for missing information
- 150: loading configuration onto electric drive 1a, electric motor 2a
- 160: executing industrial process

## Claims

1. A method (100) for configuring at least one electric drive (1) that is connectable to at least one electric motor (2), and/or the electric motor (2), the method (100) comprising the steps of:
• providing (110) a request (3) for configuring the electric drive (1) and/or electric motor (2) to at least one agent software component (4);
• decomposing (120), by the at least one agent software component (4), the task of configuring the electric drive (1) and/or electric motor (2) into a sequence (5) of sub-actions (5a-5f); and
• causing (130), by the at least one agent software component (4), the performing of each sub-action (5a-5f), so that completing all sub-actions (5a-5f) results in the electric drive (1) and/or electric motor (2) being at least partially configured,
wherein the causing (130) of the performing of at least one sub-action (5a-5f) comprises:
• obtaining (131), based on the to-be-performed sub-action (5a-5f), a query (6) for a generative machine learning model, GMLM (7);
• providing (132) both the query (6) and context information (8) to the GMLM (7), said context information (8) being at least indicative of the nature of the electric drive (1) and of the role of this electric drive (1) and the electric motor (2) to be connected to it; and
• computing (133) a result (9) with respect to the to-be-performed sub-action (5a-5f) based at least in part on the output (7a) obtained from the GMLM (7);
and/or wherein the decomposing (120) into sub-actions (5a-5f) comprises:
• obtaining (121), based on the request (3), a query (6) for a generative machine learning model, GMLM (7);
• providing (122) the query (6) to the GMLM (7) together with context information (8) that is at least indicative of the nature of the electric drive (1) and the role of this electric drive (1) and the electric motor (2) to be connected to it; and
• computing (123) a set of sub-actions (5a-5f) based at least in part on the output (7a) obtained from the GMLM (7).

2. The method (100) of claim 1, wherein the causing (130) of the performing of at least sub-action (5a-5f) comprises:
• obtaining (134), based on the to-be-performed sub-action (5a-5f), a retrieval query (10) for a database or other information retrieval system (11);
• supplying (135) the retrieval query (10) to the database or other information retrieval system (11), thereby obtaining a response (12); and
• computing (136) a result (9) with respect to the to-be-performed sub-action (5a-5f) based at least in part on the response (12) obtained from the database or other information retrieval system (11).

3. The method (100) of claim 2, wherein the retrieval query comprises (134a) at least an identifier of the electric drive (1), and/or of the electric motor (2).

4. The method (100) of any one of claims 2 to 3, wherein the database or other information retrieval system (11) is chosen (135a) to comprise configuration parameters for electric drives (1) and/or electric motors (2) in an industrial plant that are already configured, and/or for electric drives (1) and/or electric motors (2) from the same manufacturer as the to-be-configured electric drive (1) and/or electric motor (2).

5. The method (100) of any one of claims 1 to 4, wherein the causing (130) of the performing of each sub-action (5a-5f) comprises:
• determining (137), after performing one sub-action (5a-5f), whether this sub-action (5a-5f) was performed successfully; and
• in response to determining that the sub-action (5a-5f) was performed successfully, proceeding (138) to the next sub-action (5a-5f) in the sequence (5); whereas,
• in response to determining that the sub-action (5a-5f) was not performed successfully, re-doing (139) this sub-action (5a-5f).

6. The method (100) of claim 5, wherein the re-doing (139) of the sub-action (5a-5f) comprises:
• choosing (139a), by the at least one agent software component (4), at least one resource that was not used in the previous attempt of performing the sub-action (5a-5f); and
• enlisting (139b) the help of this newly chosen resource when performing the sub-action (5a-5f) again.

7. The method (100) of any one of claims 5 to 6, wherein the re-doing (139) of the sub-action (5a-5f) comprises changing (139c) an order in which at least two resources were used to perform the sub-action (5a-5f) on the previous attempt.

8. The method (100) of any of claims 5 to 7, wherein the determining (137) whether a sub-action (5a-5f) was performed successfully is based (137a) at least in part on feedback obtained from the electric drive (1) and/or electric motor (2), and/or from a controller to which the electric drive (1) and/or electric motor (2) is attached.

9. The method (100) of any one of claims 1 to 8, wherein the context information (8) comprises one or more of:
• a manual or a parameter sheet of the electric drive (1) and/or electric motor (2);
• commissioning setup information for the electric drive (1) and/or electric motor (2);
• a manual or a parameter sheet of an apparatus comprising the electric drive (1) and/or electric motor (2);
• a documentation of past configuration actions of electric drives (1) and/or electric motors (2); and
• a user application and/or use case in which the electric drive (1) and/or electric motor (2) is used.

10. The method (100) of any one of claims 1 to 9, wherein the electric drive (1), and/or the electric motor (2), comprises at least one encoder that provides precision position measurements through electrical feedback signals, configured to measure a position that is influenced by the electric motor (2), and configuring the electric drive (1), and/or the electric motor (2), comprises configuring the encoder.

11. The method (100) of any one of claims 1 to 10, wherein at least one sub-action (5a-5f) comprises (124) determining a set of configuration parameters to be applied to the electric drive (1) and/or electric motor (2).

12. The method (100) of claim 11, wherein at least one sub-action (5a-5f) comprises optimizing (124a) at least one configuration parameter towards a given goal.

13. The method (100) of any one of claims 11 to 12, wherein at least one sub-action (5a-5f) comprises checking (124b) the feasibility and/or validity of the configuration parameters based on a given ruleset.

14. The method (100) of any one of claims 11 to 13, wherein the sequence (5) of sub-tasks (5a-5f) includes the steps of:
• determining (124c) a template that designates needed configuration parameters;
• determining (124d) values of at least some of the needed configuration parameters; and
• merging (124e) these determined values with the determined template.

15. The method (100) of any one of claims 11 to 14, wherein at least one sub-action (5a-5f) comprises:
• providing (124f) information that is indicative of the type of electric drive and/or electric motor, of its location in an industrial plant, and/or of its intended use, to a trained machine learning model; and
• obtaining (124g) configuration parameters as output from the trained machine learning model.

16. The method (100) of any one of claims 1 to 15, wherein at least two sub-tasks (5a-5f) are performed concurrently by two different software agent components (4, 4', 4").

17. The method (100) of claim 16, wherein the two different software agent components (4, 4', 4")are configured to provide different sets of context information (8) to the GMLM (7).

18. The method (100) of any one of claims 1 to 17, further comprising: prompting (140) an operator of an industrial plant for configuration information that is still missing after having completed all sub-actions (5a-5f).

19. The method (100) of any one of claims 1 to 18, further comprising: loading (150) a determined configuration (1a, 2a) of the electric drive (1) and/or motor (2) onto the electric drive (1) and/or motor (2).

20. The method (100) of any one of claims 1 to 19, further comprising: executing (160) an industrial process on an industrial plant, wherein the at least partially configured electric drive (1) and/or electric motor (2) participates in the industrial process.

21. A computer program, comprising machine-readable instructions that, when executed by one or more computers and/or compute instances, cause the one or more computers and/or compute instances to perform the method (100) of any one of claims 1 to 18.

22. A machine-readable data carrier and/or a download product with the computer program of claim 21.

23. One or more computers and/or compute instances with the computer program of claim 21, and/or with the machine-readable data carrier and/or download product of claim 22.
